# EUROPÄISCHE PATENTSCHRIFT

(11) **EP 2 903 827 B1**
(45) Veröffentlichungstag und Bekanntmachung des Hinweises auf die Patenterteilung: **04.04.2018**
(21) Anmeldenummer: 13798983.6
(22) Anmeldetag: 22.11.2013
(51) Int. Cl.: B32B 17/10, B60J 1/00

(54) **VERFAHREN UND BAUSATZ ZUM HERSTELLEN UND/ODER REPARIEREN EINER TRANSPARENTEN VERBUNDSCHEIBE**
METHOD AND CONSTRUCTION KIT FOR PRODUCING AND/OR REPARING A TRANSPARENT COMPOSITE PANE
PROCÉDÉ ET KIT POUR FABRIQUER ET/OU POUR RÉPARER UNE VITRE FEUILLETÉE TRANSPARENTE

(30) Priorität: 11.12.2012 DE 102012024137
(43) Veröffentlichungstag der Anmeldung: 12.08.2015
(73) Patentinhaber: KRD Sicherheitstechnik GmbH, 21502 Geesthacht (DE)
(72) Erfinder: BUCHHOLZ, Christian, 49088 Osnabrück (DE); HINRICHSEN, Denni, 21423 Drage OT Stove (DE)
(74) Vertreter: Prüfer & Partner mbB Patentanwälte · Rechtsanwälte
(86) Internationale Anmeldenummer: PCT/EP2013/074482
(87) Internationale Veröffentlichungsnummer: WO 2014/090550

(56) Entgegenhaltungen:
- WO-A1-2004/011249
- WO-A1-2008/103407
- DE-A1- 2 728 762
- DE-A1- 3 227 647
- DE-A1-102009 058 136
- DE-C1- 3 729 880
- DE-U1- 29 917 405
- US-A- 4 299 639
- US-A1- 2007 122 572

## Beschreibung

Die Erfindung betrifft ein Verfahren zum Herstellen einer transparenten Verbundscheibe und einen Bausatz zum Durchführen eines solchen Verfahrens, insbesondere für Fahrzeuge.

Bei (Glas-)Scheiben besteht die Gefahr, dass diese durch Steinschlag, durch auftreffende Gegenstände (z.B. Wurfgeschosse, etc.) und dergleichen beschädigt werden. Im Fall von Sicherheits- und Panzerglasscheiben muss dies nicht unbedingt zu einer Zerstörung der Scheibe führen, kann aber zumindest eine Beeinträchtigung ihrer optischen Eigenschaften und damit eine Sichtbehinderung sowie eine Gefährdung ihrer Beschusssicherheit zur Folge haben.

Die DE 27 28 762 A1 offenbart ein Verfahren und eine Vorrichtung zur Herstellung einer Verbundglasscheibe aus wenigstens zwei Scheiben, die über einen durchsichtigen Kunststoff miteinander verbunden sind. Bei der Herstellung der Verbundglasscheibe werden die beiden Scheiben durch einen Abstandhalter im Randbereich auf Abstand gehalten, wird der Randbereich abgedichtet, und wird dann der flüssige Kunststoff bei gleichzeitigem Ablassen der verdrängten Luft durch eine Öffnung in der Dichtung in den Zwischenraum zwischen den beiden Scheiben eingefüllt.

Die DE 37 29 880 C1 beschreibt eine Schutzeinrichtung für Kraftfahrzeugfenster, bei welcher eine Windschutzscheibe eines Kraftfahrzeuges mit einer Vorsatzscheibe aus einem hochschlagzähen Kunststoff unter Einhaltung eines Zwischenraums verbunden wird. In den Zwischenraum ist ein Gießharz eingefüllt, dessen Zustand nach der Polymerisation gelartig ist. Da die gelartige Gießharzschicht ein Abziehen der Scheibe zulassen soll, liegt eine Schutzscheiben-Verbundkombination mit austauschbarem Verschleißteil vor.

Es ist eine Aufgabe der vorliegenden Erfindung, ein verbessertes System zum Herstellen einer transparenten Verbundscheibe mit einer transparenten Scheibe und einer austauschbaren, transparenten Schutzscheibe zu schaffen.

Diese Aufgabe wird gelöst durch die Lehren der unabhängigen Ansprüche. Besonders bevorzugte Ausgestaltungen und Weiterbildungen sind Gegenstand der abhängigen Ansprüche.

Das erfindungsgemäße Verfahren zum Herstellen einer transparenten Verbundscheibe, welche eine transparente Scheibe zum Verschließen einer Sichtöffnung in einer Wandung und eine austauschbare transparente Schutzscheibe, welche an einer Außenseite der Scheibe diese Scheibe zumindest teilweise überdeckend angeordnet ist, aufweist, weist die folgenden Schritte auf:
- Bereitstellen einer transparenten Schutzscheibe;
- Fixieren der Schutzscheibe an der Scheibe mittels eines Klebestreifens im umlaufenden Randbereich der Schutzscheibe;
- Drücken der Schutzscheibe gegen die Scheibe mit einer im Wesentlichen einheitlichen Druckverteilung über die Schutzscheibe hinweg, wobei der Klebestreifen derart formstabil ist, dass er einen im Wesentlichen einheitlichen Zwischenraum zwischen der Scheibe und der Schutzscheibe bildet;
- Füllen des Zwischenraums zwischen der Scheibe und der Schutzscheibe mit einem transparenten Klebematerial, während die Schutzscheibe weiter gegen die Scheibe gedrückt wird; und
- Aushärten des Klebematerials, während die Schutzscheibe zumindest teilweise weiter gegen die Scheibe gedrückt wird,
wobei als transparentes Klebematerial ein bei Raumtemperatur gießbarer, bei Raumtemperatur additionsvernetzender Zweikomponenten-Silikonkautschuk verwendet wird, dessen Zustand nach der Vulkanisation gelartig ist oder ein Zweikomponenten-Gießharz verwendet wird. Die transparente Schutzscheibe schützt die transparente Scheibe der Verbundscheibe insbesondere vor mechanischen und chemischen Angriffen, insbesondere vor Beschädigungen durch Steinschlag, auftreffende Gegenstände und dergleichen. Im Fall einer Beschädigung der Schutzscheibe kann diese aufgrund der von der Scheibe lösbaren Klebeverbindung von der Scheibe, welche durch die vorgeschaltete Schutzscheibe unversehrt geblieben ist, wieder entfernt und durch eine neue Schutzscheibe ersetzt werden.

Die Verklebung hat neben ihrer Aufgabe, die Schutzscheibe lösbar an der zu schützenden Scheibe zu befestigen, auch die Funktionen, etwaige mechanische Fertigungstoleranzen bei den (Schutz-)Scheiben auszugleichen und die unterschiedlichen thermischen Ausdehnungen von Scheibe und Schutzscheibe auszugleichen.

Durch die Schaffung eines einheitlichen Zwischenraumes zwischen Scheibe und Schutzscheibe und einer einheitlichen Druckverteilung der Schutzscheibe gegen die Scheibe wird eine einheitliche Klebeverbindung zwischen Scheibe und Schutzscheibe über das in den Zwischenraum gefüllte transparente Klebematerial geschaffen. Die einheitliche Klebeverbindung gewährleistet eine transparente Verbundscheibe, bei der die optischen Eigenschaften (insbes. Transmissionsgrad, Lichtbrechung, etc.) der Komponenten Scheibe und Verbundscheibe möglichst unwesentlich beeinträchtigt oder beeinflusst werden und die einschlägigen Normvorschriften (z.B. DIN 52305 für Sicherheitsscheiben von Fahrzeugen) eingehalten werden können. Eine einheitliche Klebeverbindung ermöglicht insbesondere auch eine gleichmäßige Lichtbrechung über die gesamte Schutzscheibe hinweg.

In diesem Zusammenhang soll eine "im Wesentlichen einheitliche Druckverteilung über die Schutzscheibe hinweg" bedeuten, dass die Schutzscheibe an jeder Position mit im Wesentlichen der gleichen Kraft in Richtung zur Scheibe gedrückt wird. Dies wird vorzugsweise durch eine gleichmäßige Druckbeaufschlagung der Schutzscheibe in Richtung zur Scheibe erzielt. Diese gleichmäßige Druckbeaufschlagung der Schutzscheibe erfolgt vorzugsweise im Wesentlichen vollflächig oder über gleichmäßig verteilte Teilflächen. Die Druckverteilung bzw. die Druckbeaufschlagung sind während des gesamten Verfahrens, insbesondere während des Einfüllens und zumindest der Anfangsphase des Aushärtens des Klebematerials, vorzugsweise im Wesentlichen konstant. Insbesondere beim Füllen des Klebematerials in den Zwischenraum zwischen Schutzscheibe und Scheibe kann so ein Ausbauchen der Schutzscheibe durch das Klebematerial verhindert werden.

Der "im Wesentlichen einheitliche Zwischenraum" zwischen der Scheibe und der Schutzscheibe soll in diesem Zusammenhang bedeuten, dass der Zwischenraum an jeder Position im Wesentlichen die gleiche Tiefe aufweist, d.h. die Schutzscheibe von der Scheibe an jeder Position im Wesentlichen den gleichen Abstand aufweist.

Im Ergebnis wird durch das erfindungsgemäße Verfahren eine einheitliche Verklebung zwischen Scheibe und Schutzscheibe erzielt. D.h. dass die durch das in den Zwischenraum gefüllte Klebematerial gebildete Klebeschicht an jeder Position im Wesentlichen die gleiche Schichtdicke hat und die Klebeschicht im Wesentlichen homogen ist (d.h. möglichst keine Gas- oder Materialeinschlüsse aufweist und aus einem möglichst homogenen Klebematerial gebildet ist). Dabei wird die Schichtdicke der Klebeschicht durch den Klebestreifen vorgegeben, mit dem die Schutzscheibe an der Scheibe (vor-)fixiert wird. Hierfür ist der Klebestreifen ausreichend formstabil ausgestaltet. Insbesondere wird der Klebestreifen bei der Druckbelastung durch die Schutzscheibe vorzugsweise nicht oder nur auf ein vorgegebenes Maß in seiner Dickenrichtung komprimiert.

Das erfindungsgemäße Verfahren und die erfindungsgemäße Konstruktion der transparenten Verbundscheibe sind insbesondere von Vorteil in Zusammenhang mit aufwändig herzustellenden und/oder zu montierenden Scheiben wie zum Beispiel Scheiben aus Sicherheitsglas oder Panzerglas oder komplex geformten Scheiben. Die Erfindung ist insbesondere auch von Vorteil in Zusammenhang mit schusssicheren Scheiben, da deren Beschusssicherheit selbst bei einer Beschädigung der Schutzscheibe weiter gewährleistet bleiben kann.

Die transparente Schutzscheibe überdeckt eine Außenseite der transparenten Scheibe zumindest teilweise. Vorzugsweise wird die zu schützende, transparente Scheibe, zumindest aber deren freier Sichtbereich (z.B. im Fall von den Scheibenrand umgreifenden Halterahmen), im Wesentlichen vollständig von der Schutzscheibe überdeckt.

Die Erfindung ist insbesondere bei Fahrzeugen in vorteilhafter Weise einsetzbar. Hierzu zählen sowohl zivile wie auch militärische Kraftfahrzeuge, und dabei insbesondere Landfahrzeuge und Wasserfahrzeuge.

Die Erfindung ist grundsätzlich mit beliebigen Arten von transparenten Scheiben verwendbar. Hierzu zählen insbesondere einlagige und mehrlagige Scheiben (verbünde), Scheiben aus Glas- und/oder Kunststoff-Materialien, im Wesentlichen plane Scheiben und einfach oder mehrfach gekrümmte Scheiben, sowie Scheiben von grundsätzlich beliebigen Dimensionen und Designs.

Eine spezielle Vorbehandlung der Scheibe, genauer ihrer Außenseite ist zur Durchführung des Verfahrens der Erfindung nicht erforderlich. Es ist insbesondere ausreichend, die Scheibe zu reinigen.

Die transparente Scheibe, und mit dieser auch die gesamte transparente Verbundscheibe, dient dem Verschließen einer Sichtöffnung. Unter einer Sichtöffnung soll in diesem Zusammenhang jede Art von Öffnung in einer mobilen Einrichtung (z.B. Fahrzeug) oder stationären Einrichtung (z.B. Gebäude) verstanden werden, durch welche Personen oder Geräte (z.B. Sichtgeräte, optische Messgeräte, etc.) von innen nach außen und/oder von außen nach innen hindurch sehen können. Zu den Sichtöffnungen zählen in diesem Zusammenhang insbesondere Fensteröffnungen in Fahrzeugen und Gebäuden.

Bei der Schutzscheibe der erfindungsgemäßen Verbundscheibe handelt es sich bevorzugt um eine transparente Kunststoffscheibe, vorzugsweise im Wesentlichen aus einem Polyester, besonders bevorzugt im Wesentlichen aus Polycarbonat (PC). Die Schutzscheibe kann als einlagige oder mehrlagige Scheibe ausgebildet sein. Die Formgebung (z.B. plan, gekrümmt, etc.) der Schutzscheibe entspricht vorzugsweise im Wesentlichen der Formgebung der zu schützenden Scheibe. Die Schichtdicke der Schutzscheibe ist vorzugsweise über die gesamte Fläche hinweg im Wesentlichen konstant. Die Schutzscheibe hat vorzugsweise eine Schichtdicke von wenigstens etwa 1 mm, bevorzugter von wenigstens etwa 2,5 mm, und/oder von höchstens etwa 20 mm, bevorzugter von höchstens etwa 10 mm. Über die Wahl der Schichtdicke der Schutzscheibe können ihre mechanische Festigkeit und damit ihre Schutzwirkung eingestellt werden.

Der Begriff "transparent" soll in diesem Zusammenhang eine Durchlässigkeit der Verbundscheibe bzw. ihrer Komponenten insbesondere im sichtbaren Wellenlängenbereich bezeichnen. Eine Durchlässigkeit für elektromagnetische Strahlung in anderen Wellenlängenbereichen kann zusätzlich vorhanden sein. Der Transmissionsgrad für elektromagnetische Strahlung im sichtbaren Wellenlängenbereich beträgt für die transparenten Komponenten (Scheibe, Schutzscheibe, Verklebung) jeweils vorzugsweise wenigstens etwa 80%, bevorzugter wenigstens etwa 85%. Die transparenten Scheiben(komponenten) umfassen in diesem Zusammenhang insbesondere klar durchsichtige Komponenten, aber auch farbige oder getönte Komponenten sowie diffus streuende Komponenten. Die Transparenzeigenschaften der verschiedenen Komponenten der Verbundscheibe können zueinander unterschiedlich sein oder im Wesentlichen übereinstimmen.

In einer bevorzugten Ausgestaltung der Erfindung wird die Schutzscheibe auf der Außenseite der Scheibe aufgebracht, nachdem die Scheibe die Sichtöffnung verschließend an der Wandung montiert worden ist. Mit anderen Worten können mit dem erfindungsgemäßen Verfahren vorzugsweise auch bereits montierte Scheiben in Sichtöffnungen zu einer transparenten Verbundscheibe der Erfindung nachgerüstet werden bzw. können die transparenten Verbundscheiben der Erfindung auch im montierten Zustand (durch Austausch der Verbundscheibe) repariert werden.

Das transparente Klebematerial ist ein bei Raumtemperatur gießbares, aushärtendes Material, insbesondere ein bei Raumtemperatur additionsvernetzendes Zweikomponenten-Klebematerial. Gemäß der Erfindung wird hierzu ein Zweikomponenten-Silikonkautschuk bzw. ein Zweikomponenten-Gießharz verwendet. Für den Silikongummi wird ein gießbarer, bei Raumtemperatur vulkanisierbarer, additionsvernetzender Zweikomponenten-Silikonkautschuk verwendet, welcher nicht zu einem Silikongummi im herkömmlichen Sinne vulkanisiert, sondern ein weiches, gelartiges, klebriges Vulkanisat ergibt. Das Klebematerial besitzt im nicht ausgehärteten Zustand vorzugsweise eine geringe Viskosität von wenigstens etwa 100 mPa·s und/oder von höchstens etwa 1.000 mPa·s. Das Klebematerial besitzt im ausgehärteten Zustand vorzugsweise eine Haftkraft von wenigstens etwa 1 kg/cm² und/oder von höchstens etwa 30 kg/cm² gegenüber der Scheibe und gegenüber der Schutzscheibe, vorzugsweise eine Härte von wenigstens etwa Shore A 30 und/oder höchstens etwa Shore D 50, und/oder vorzugsweise eine Bruchdehnung von wenigstens etwa 50% und/oder höchstens etwa 500%. Die angegebenen Zahlenwerte beziehen sich dabei jeweils auf Raumtemperatur. Das Klebematerial ermöglicht ein Lösen der Schutzscheibe von der Scheibe, ohne die Scheibe zu beschädigen oder zu zerstören.

Das ausgehärtete Klebematerial hat vorzugsweise eine Schichtdicke von wenigstens etwa 0,1 mm, bevorzugter von wenigstens etwa 0,5 mm, und/oder von höchstens etwa 10 mm, bevorzugter von höchstens etwa 5 mm, besonders bevorzugt sind Schichtdicken von etwa 1 mm, etwa 1,5 mm und etwa 2 mm.

Wird die Schutzscheibe aus Polycarbonat gefertigt, welches sich durch hohe Festigkeit, Schlagzähigkeit, Steifigkeit und Härte auszeichnet, kann durch die Kombination mit einem Silikon-Kautschuk als Klebematerial, welcher sich durch die niedrige Härte und die hohen mechanischen Dämpfungseigenschaften auszeichnet, eine relativ dünne Schutzscheibe verwendet werden, sodass die optischen Eigenschaften der Scheibe durch die Schutzscheibe nicht wesentlich gestört werden.

Das Klebematerial wird vorzugsweise mittels einer Vakuum- und/oder Druckinjektion und/oder mittels Schwerkraft (z.B. aus einem Trichter) in den Zwischenraum zwischen der Scheibe und der Schutzscheibe eingebracht.

Der Klebestreifen ist vorzugsweise inkompressibel ausgestaltet, d.h. bei der herstellungstechnisch bedingten Druckbelastung inkompressibel. Der Klebestreifen ist vorzugsweise aus einem Elastomer-Werkstoff gebildet. Der Klebestreifen im umlaufenden Randbereich der Schutzscheibe weist vorzugsweise einen doppelseitigen Klebestreifen auf. Der doppelseitige Klebestreifen ist vorzugsweise, aber nicht notwendigerweise im Wesentlichen transparent ausgebildet. Der doppelseitige Klebestreifen dient während der Herstellung der Verbundscheibe insbesondere einer Vorfixierung der Schutzscheibe an der Scheibe und/oder einer Begrenzung des mit dem Klebematerial zu füllenden Zwischenraums.

In einer bevorzugten Ausgestaltung der Erfindung wird die Schutzscheibe mittels einer Druckplatte gegen die Scheibe gedrückt, welche eine der Schutzscheibe zugewandte Innenseite aufweist, welche eine der Scheibe abgewandte Außenseite der Schutzscheibe im Wesentlichen vollflächig kontaktiert. Die Druckplatte ist vorzugsweise entsprechend der Schutzscheibe dimensioniert und geformt. Die der Schutzscheibe zugewandte Innenseite der Druckplatte ist vorzugsweise im Wesentlichen konform zur Scheibe ausgebildet, sodass sie deren ggf. gekrümmter Form folgen kann. Die Druckplatte ist grundsätzlich aus einem beliebigen Material gefertigt, bevorzugt aus einem Metall (z.B. Aluminium), einem Kunststoff, einem Modellschaum oder dergleichen.

In einer bevorzugten Ausgestaltung der Erfindung wird die Druckplatte mittels Unterdruck gegen die Schutzscheibe gedrückt. Mit Hilfe eines Unterdrucks kann eine besonders einheitliche Druckverteilung der Druckplatte gegen die Schutzscheibe erzielt werden. Der Unterdruck liegt bevorzugt im Bereich von etwa 10³ mbar bis etwa 10 mbar.

Zu diesem Zweck ist die Druckplatte vorzugsweise als so genannte Vakuumplatte ausgebildet. D.h. die der Schutzscheibe zugewandte Innenseite der Druckplatte weist vorzugsweise mehrere Ausnehmungen (z.B. Rillen, Nuten, etc.) auf, sodass ein durch diese Ausnehmungen gebildeter Raum zwischen der Druckplatte und der Schutzscheibe evakuiert werden kann. Die auf diese Weise mittels Unterdruck gegen die Schutzscheibe gedrückte Druckplatte verhindert durch ihre Formstabilität eine Verformung der Schutzscheibe beim Einfüllen des Klebematerials, und der formstabile Klebestreifen gewährleistet einen gleichbleibenden Abstand zwischen Scheibe und Schutzscheibe.

Vorzugsweise weist die Druckplatte an ihrer der Schutzscheibe abgewandten Außenseite wenigstens einen Absaugstutzen auf, der über Durchgangsöffnungen mit den Ausnehmungen an der Innenseite der Druckplatte in Fluidverbindung steht. Die Ausnehmung an der Innenseite der Druckplatte ist vorzugsweise mittels einer Abdichtung gegenüber der Umgebung der Druckplatte fluiddicht abgedichtet.

In einer anderen bevorzugten Ausgestaltung der Erfindung wird die Druckplatte mittels einer Halteeinrichtung unter Vorspannung gegen die Scheibe (bzw. die Schutzscheibe) an der Wandung und/oder der Scheibe befestigt.

In einer weiteren bevorzugten Ausgestaltung der Erfindung wird die an der Scheibe fixierte Schutzscheibe (ggf. inklusive Druckplatte) mit einer fluiddichten Hülle überdeckt und wird ein Innenraum der Hülle evakuiert, um die Schutzscheibe gegen die Scheibe zu drücken. Mit Hilfe eines derart erzeugten Unterdrucks kann eine besonders einheitliche Druckverteilung erzielt werden. Der Unterdruck liegt bevorzugt im Bereich von etwa 10³ mbar bis etwa 10 mbar. Die Hülle ist vorzugsweise in Folienstärke ausgebildet. Die Hülle ist bevorzugt aus einem Kunststoffmaterial, bevorzugt aus einem Nylon-Material gefertigt. Die fluiddichte Hülle ist ein- oder mehrlagig ausgestaltet.

Vorzugsweise wird die fluiddichte Hülle mit einer fluiddichten Klebeverbindung an der Wandung und/oder der Scheibe befestigt. Die fluiddichte Klebeverbindung ist vorzugsweise als ein doppelseitiges Klebeband ausgestaltet.

Vorzugsweise weist die fluiddichte Hülle wenigstens eine Einfüllöffnung, welche mit dem Zwischenraum in Fluidverbindung steht und gegenüber der Hülle mittels einer fluiddichten Abdichtung abgedichtet ist, und wenigstens eine Entlüftungsöffnung, welche mit dem Zwischenraum in Fluidverbindung steht und gegenüber der Hülle mittels einer fluiddichten Abdichtung abgedichtet ist, auf.

In einer weiteren bevorzugten Ausgestaltung der Erfindung wird das Klebematerial stirnseitig in den Zwischenraum zwischen der Scheibe und der Schutzscheibe eingebracht. Zu diesem Zweck weist der Klebestreifen vorzugsweise wenigstens eine Aussparung auf. Das Klebematerial wird vorzugsweise an einer oberen Stirnseite oder in einem oberen Bereich einer seitlichen Stirnseite in den Zwischenraum eingebracht, sodass der Zwischenraum im Wesentlichen von unten nach oben mit dem Klebematerial gefüllt werden kann, um trotz der Schwerkraft eine möglichst einheitliche Verklebung erzielen zu können. Zusätzlich ist vorzugsweise eine Entlüftungsöffnung, insbesondere auch in einer Stirnseite des Zwischenraums vorgesehen.

In einer weiteren bevorzugten Ausgestaltung der Erfindung wird das Klebematerial durch wenigstens eine Durchgangsöffnung in der Schutzscheibe in den Zwischenraum zwischen der Scheibe und der Schutzscheibe eingebracht. Die wenigstens eine Durchgangsöffnung wird nach dem Füllen des Zwischenraums mit dem Klebematerial vorzugsweise mit dem gleichen Klebematerial transparent verschlossen. Vorzugsweise sind wenigstens zwei Durchgangsöffnungen in der Schutzscheibe vorgesehen, von denen wenigstens eine Durchgangsöffnung (bevorzugt im unteren Bereich der Schutzscheibe) zum Einbringen des Materials dient und wenigstens eine andere Durchgangsöffnung (bevorzugt im oberen Bereich der Schutzscheibe) dem Entlüften des Zwischenraums während des Einbringens des Materials dient.

Die wenigstens eine Durchgangsöffnung bzw. die wenigstens zwei Durchgangsöffnungen sind vorzugsweise im Randbereich der Schutzscheibe vorgesehen, so dass sie am Rand des Sichtbereiches der Verbundscheibe liegen.

Die beiden vorgenannten Ausgestaltungen der Erfindung können wahlweise auch miteinander kombiniert werden.

In einer noch weiteren bevorzugten Ausgestaltung der Erfindung wird ein umlaufender Rand zwischen der Scheibe und der Schutzscheibe nach dem Einfüllen oder nach dem Aushärten des Klebematerials zumindest teilweise fluiddicht abgedichtet. Mit dieser Maßnahme kann ein Eindringen von Feuchtigkeit in den Zwischenraum bzw. die Verklebung verhindert werden.

Gegenstand der Erfindung ist auch ein Bausatz zum Herstellen einer transparenten Verbundscheibe, welcher aufweist: eine transparente Schutzscheibe; ein Klebematerial für einen formstabilen Klebestreifen zum Fixieren der Schutzscheibe an einer Außenseite einer transparenten Scheibe im umlaufenden Randbereich der Schutzscheibe und Bilden eines im Wesentlichen einheitlichen Zwischenraumes zwischen der Scheibe und der Schutzscheibe; ein transparentes Klebematerial zum vollflächigen Verkleben der Schutzscheibe mit der Scheibe; und eine Einrichtung zum Drücken der Schutzscheibe gegen die Scheibe während des Füllens des transparenten Klebematerials in den Zwischenraum zwischen der Scheibe und der Schutzscheibe und des Aushärtens des transparenten Klebematerials mit einer im Wesentlichen einheitlichen Druckverteilung über die Schutzscheibe hinweg, wobei das transparente Klebematerial ein bei Raumtemperatur gießbarer, bei Raumtemperatur additionsvernetzender Zweikomponenten-Silikonkautschuk oder Zweikomponenten-Gießharz ist, dessen Zustand nach der Vulkanisation bzw. Polymerisation gelartig ist.

Dieser erfindungsgemäße Bausatz eignet sich insbesondere zum Anbringen oder Austauschen von transparenten Schutzscheiben auf/von bereits montierten Scheiben.

In einer bevorzugten Ausgestaltung der Erfindung weist die Einrichtung zum Drücken der Schutzscheibe gegen die Scheibe eine Druckplatte auf, die eine der Schutzscheibe zugewandte Innenseite hat, welche eine der Scheibe abgewandte Außenseite der Schutzscheibe im Wesentlichen vollflächig kontaktiert.

In einer bevorzugten Ausgestaltung der Erfindung weist die Innenseite dieser Druckplatte mehrere Ausnehmungen und einen mit diesen Ausnehmungen in Fluidverbindung stehenden Absaugstutzen zum Evakuieren eines durch die Ausnehmungen zwischen der Druckplatte und der Schutzscheibe gebildeten Raums auf.

In einer anderen bevorzugten Ausgestaltung der Erfindung weist die Einrichtung zum Drücken der Schutzscheibe gegen die Scheibe ferner eine Halteeinrichtung auf, mit welcher die Druckplatte an der Wandung und/oder der Scheibe befestigt werden kann und dabei unter Vorspannung gegen die Scheibe steht.

In einer weiteren bevorzugten Ausgestaltung der Erfindung weist die Einrichtung zum Drücken der Schutzscheibe gegen die Scheibe eine fluiddichte Hülle zum Überdecken der an der Scheibe fixierten Schutzscheibe auf, welche fluiddicht an der Wandung und/oder der Scheibe befestigbar ist und einen Absaugstutzen zum Evakuieren eines Innenraums der Hülle aufweist.

In einer bevorzugten Ausgestaltung der Erfindung enthält der Bausatz zudem eine Vorrichtung zum Einbringen des Klebematerials in einen Zwischenraum zwischen der Schutzscheibe und einer Scheibe.

In einer bevorzugten Ausgestaltung der Erfindung weist der Bausatz zudem eine Vorrichtung zum Lösen einer Schutzscheibe und einer Verklebung von einer Scheibe einer Verbundscheibe, insbesondere von einer in/vor einer Sichtöffnung montierten Scheibe, auf.

Der erfindungsgemäße Bausatz ist insbesondere zur Durchführung des oben beschriebenen Verfahrens der Erfindung zum Herstellen und/oder Reparieren einer transparenten Verbundscheibe geeignet bzw. ausgestaltet.

Obige sowie weitere Merkmale und Vorteile der Erfindung werden aus der nachfolgenden Beschreibung bevorzugter, nicht-einschränkender Ausführungsbeispiele anhand der beiliegenden Zeichnungen besser verständlich. Darin zeigen, teils schematisiert und teils nicht maßstabsgetreu:
- Fig. 1: Teilquerschnittsansichten einer transparenten Verbundscheibe gemäß einem Ausführungsbeispiel der Erfindung in zwei Varianten;
- Fig. 2: Schnittansichten zum Erläutern des Einfüllens des Klebematerials bei einem Herstellungsverfahren der Verbundscheibe von Fig. 1 gemäß einem Ausführungsbeispiel der Erfindung;
- Fig. 3: Schnittansichten zum Erläutern des Einfüllens des Klebematerials bei einem Herstellungsverfahren der Verbundscheibe von Fig. 1 gemäß einem weiteren Ausführungsbeispiel der Erfindung;
- Fig. 4: eine Draufsicht (Teilfigur 4A) und eine Schnittansicht (Teilfigur 4B) zum Erläutern des Drückens der Schutzscheibe gegen die Scheibe bei einem Herstellungsverfahren der Verbundscheibe von Fig. 1 gemäß einem Ausführungsbeispiel der Erfindung;
- Fig. 5: eine Schnittansicht (Teilfigur 5A) und eine Perspektivansicht einer Druckplatte (Teilfigur 5B) zum Erläutern des Drückens der Schutzscheibe gegen die Scheibe bei einem Herstellungsverfahren der Verbundscheibe von Fig. 1 gemäß einem weiteren Ausführungsbeispiel der Erfindung;
- Fig. 6: eine Seitenansicht (Teilfigur 6A), eine vergrößerte Detailansicht (Teilfigur 6B) und eine Draufsicht (Teilfigur 6C) zum Erläutern des Drückens der Schutzscheibe gegen die Scheibe bei einem Herstellungsverfahren der Verbundscheibe von Fig. 1 gemäß einem noch weiteren Ausführungsbeispiel der Erfindung;
- Fig. 7: eine Teilquerschnittsansicht einer transparenten Verbundscheibe gemäß einem weiteren Ausführungsbeispiel der Erfindung; und
- Fig. 8: eine Teilquerschnittsansicht einer transparenten Verbundscheibe gemäß einer alternativen Ausführungsform.

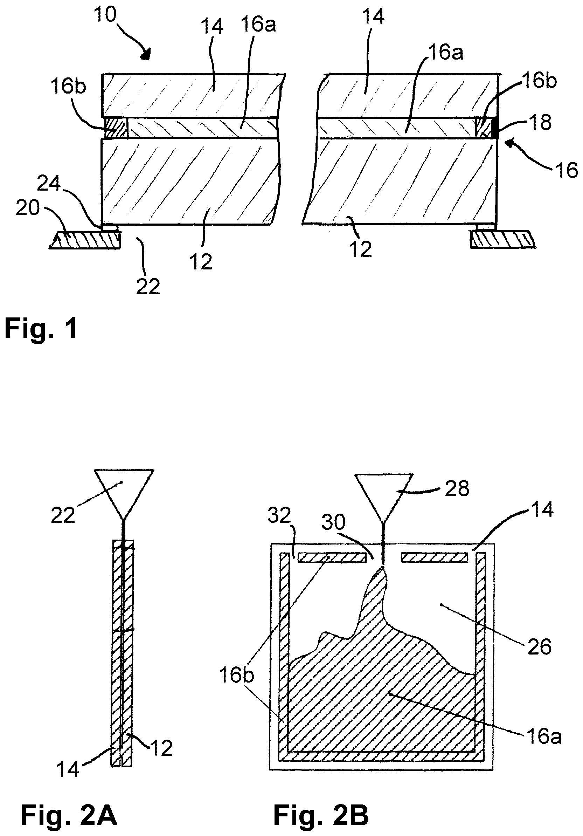

In Fig. 1 ist zunächst der Aufbau einer transparenten Verbundscheibe gemäß einem bevorzugten Ausführungsbeispiel der Erfindung dargestellt.

Die Verbundscheibe 10 weist eine transparente Scheibe 12 auf, welche eine Sichtöffnung 22, zum Beispiel ein Fenster eines Kraftfahrzeuges verschließt. Bei der transparenten Scheibe 12 handelt es sich beispielsweise eine Scheibe aus Sicherheitsglas oder Panzerglas, wobei die Scheibe 12 ein- oder mehrlagig ausgebildet sein kann. Die Scheibe 12 ist in ihrem Randbereich an der die Sichtöffnung 22 umgebenden Wandung 20, zum Beispiel einer Karosserie eines Kraftfahrzeuges befestigt, in diesem Beispiel mittels einer umlaufenden Kleberaupe 24.

Auf einer Außenseite dieser Scheibe 12 (oben in Fig. 1) ist eine transparente Schutzscheibe 14 angeordnet. Die Schutzscheibe 14 ist zum Beispiel aus Polycarbonat (PC) gefertigt und kann ein- oder mehrlagig ausgebildet sein. Das Polycarbonat zeichnet sich in diesem Zusammenhang insbesondere durch seine hohe Festigkeit, Schlagzähigkeit, Steifigkeit und Härte aus.

Wie in Fig. 1 veranschaulicht, ist die Schutzscheibe 14 im Wesentlichen entsprechend der Scheibe 12 dimensioniert, so dass sie diese im Wesentlichen vollständig überdeckt. Im Ausführungsbeispiel von Fig. 1 sind sowohl die Scheibe 12 als auch die Schutzscheibe 14 jeweils im Wesentlichen plan ausgestaltet. Die Verbundscheibe 10 kann aber auch bei ein- oder mehrfach gekrümmten Scheiben 12 zum Einsatz kommen; in diesem Fall ist die Schutzscheibe 14 entsprechend der Scheibe 12 geformt, d.h. folgt deren Krümmung.

Je nach der gewünschten Festigkeit und damit der gewünschten Schutzwirkung der Schutzscheibe 14 besitzt diese eine Schichtdicke (Maß in Oben/Unten-Richtung in Fig. 1) im Bereich von beispielsweise etwa 1 bis 20 mm.

Die Schutzscheibe 14 ist mittels einer Verklebung 16 lösbar an der Außenseite der Scheibe 12 angebracht. Die lösbare Klebeverbindung ermöglicht ein Entfernen der Schutzscheibe 14 von der Scheibe 12, ohne die Scheibe 12 zu beschädigen oder zu zerstören, und somit ein Austauschen der Schutzscheibe 14. Die Verklebung 16 ist im Wesentlichen vollflächig (d.h. möglichst unterbrechungsfrei) und im Wesentlichen homogen (d.h. mit möglichst konstanter Dichte, ohne Gaseinschlüsse, etc.) und mit möglichst konstanter Schichtdicke ausgeführt, um möglichst einheitliche optische Eigenschaften der Verbundscheibe 10 (d.h. Transmissionsgrad, Brechungswinkel, etc.) und mechanische Eigenschaften (d.h. Dämpfung, thermische Ausdehnung, etc.) über die Schutzscheibe 14 hinweg zu gewährleisten.

In dem Ausführungsbeispiel von Fig. 1 ist die Verklebung 16 durch eine möglichst homogene Klebeschicht 16a gleichmäßiger Schichtdicke gebildet. Sie besteht zum Beispiel aus einem vulkanisierten Silikongummi oder einem polymerisierten Gießharz, welches jeweils aus einem bei Raumtemperatur gießbaren Material, vorzugsweise aus zwei Komponenten, gebildet wurde. Die Klebeschicht 16a ist wie die Scheibe 12 und die Schutzscheibe 14 im Wesentlichen transparent. Die Klebeschicht 16a und damit die Verklebung 16 haben eine Schichtdicke von beispielsweise etwa 1 mm, etwa 1,5 mm oder etwa 2 mm.

In einem bevorzugten Ausführungsbeispiel wird für die Klebeschicht 16a ein bei Raumtemperatur gießbarer, bei Raumtemperatur additionsvernetzender Zweikomponenten-Kleber verwendet. Dieser Spezialkleber zeichnet sich durch seine Dünnflüssigkeit im nicht-ausgehärteten Zustand (geringe Viskosität von z.B. etwa 100 bis 1.000 mPa·s), eine sehr geringe Härte, eine glasklare Optik und exzellente mechanische Dämpfungseigenschaften aus. Die transparente Klebeschicht 16a hat so zum Beispiel eine Dichte von etwa 0,97 g/cm³ bei 23°C (DIN 53 479 A), eine Walkpenetration von etwa 300 mm/10 (DIN ISO 2137), eine Härte von etwa Shore A 30 oder höchstens etwa Shore D 50, ein E-Modul von etwa 0,005 MPa, einen linearen Wärmeausdehnungskoeffizienten von etwa 300 × 10⁻⁶ m/mK, eine Brechzahl n_{D}²⁵ von etwa 1,404 bei 25°C und einen Transmissionsgrad von mehr als 88% für den Wellenlängenbereich von etwa 400-700 nm für eine Schichtdicke von 10 mm.

Im umlaufenden Randbereich der Schutzscheibe 14 weist die Verklebung 16 zudem einen doppelseitigen Klebestreifen 16b aus einem vorzugsweise im Wesentlichen transparenten Material, insbesondere einem speziellen Elastomer-Werkstoff auf. Dieser Klebestreifen 16b dient dem Vorfixieren der Schutzscheibe 14 auf der Scheibe 12, dem Begrenzen eines mit der Klebeschicht 16a zu füllenden Zwischenraums 26 zwischen der Schutzscheibe 14 und der Scheibe 12, und einer Vorgabe der Schichtdicke der Verklebung 16. Der Klebestreifen 16b ist dabei derart formstabil bzw. inkompressibel, dass er während der gesamten Herstellung der Verbundscheibe 10 einen im Wesentlichen einheitlichen Zwischenraum 26 (d.h. im Wesentlichen konstante Schichtdicke) zwischen der Scheibe 12 und der Schutzscheibe 14 gewährleistet. Dies gilt insbesondere auch für die später beschriebenen Herstellungsverfahren, bei denen die Schutzscheibe 14 gegen die Scheibe 12 gedrückt wird. Durch die Formstabilität des Klebestreifens 16b bleibt der Abstand zwischen Scheibe 12 und Schutzscheibe 14 konstant, was für die optische Qualität der Verbundscheibe von entscheidendem Vorteil ist.

Wie in der rechten Teildarstellung von Fig. 1 angedeutet, kann der Außenumfang der Verklebung 16 optional zudem mit einer im Wesentlichen fluiddichten Dichtung 18 versehen werden, um ein Eindringen von Feuchtigkeit zwischen die Schutzscheibe 14 und die Scheibe 12 zu verhindern.

Anhand von Fig. 2A und 2B wird nun ein Herstellungsverfahren für eine solche Verbundscheibe 10 näher erläutert.

Zunächst wird die Schutzscheibe 14 mit Hilfe des doppelseitigen Klebestreifens 16b auf der Außenseite der Scheibe 12 fixiert. Wie in Fig. 2B dargestellt, hat der doppelseitige Klebestreifen 16b im oberen Bereich der Schutzscheibe 14 mehrere Aussparungen, welche als Einfüllöffnung(en) 30 bzw. als Entlüftungsöffnung(en) 32 während des Einbringens des Materials für die Klebeschicht 16a dienen.

Das bei Raumtemperatur fließfähige Klebematerial wird beispielsweise mit Hilfe eines Trichters 28 und mittels Schwerkraftwirkung (alternativ: mittels Druckinjektion) stirnseitig von oben in den Zwischenraum 26 zwischen der Schutzscheibe 14 und der Scheibe 12 eingebracht. Wie in Fig. 2B dargestellt, füllt sich dabei der Zwischenraum 26 von unten nach oben mit dem Material für die Klebeschicht 16a. Dabei dürfen in der Klebeschicht 16a im Hinblick auf die gewünschte Transparenz der Verbundscheibe 10 keine Schlieren oder Luftblasen entstehen. Hierzu sollte ein sorgfältiges Entgasen und Mischen des Zweikomponenten-Gemenges des Klebematerials erreicht werden.

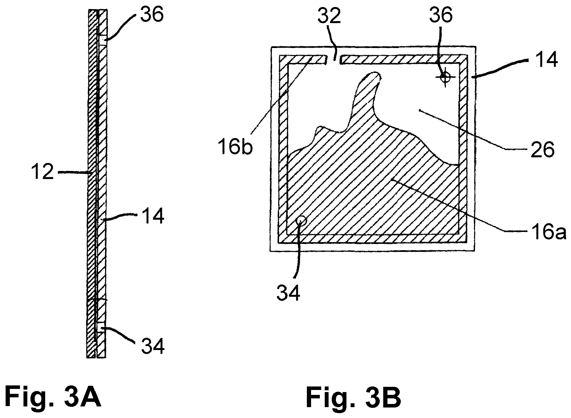

Bezug nehmend auf Fig. 3A und 3B wird ein alternatives Herstellungsverfahren für die Verbundscheibe 10 der Erfindung näher erläutert.

Wie in Fig. 3B dargestellt, ist in diesem Fall der doppelseitige Klebestreifen 16b zum Vorfixieren der Schutzscheibe 14 im Wesentlichen entlang des gesamten Umfanges der Schutzscheibe 14 vorgesehen. Um das Material für die transparente Klebeschicht 16a in den Zwischenraum 26 zwischen der Schutzscheibe 14 und der Scheibe 12 innerhalb des Klebestreifens 16b einbringen zu können, sind in diesem Fall mehrere Durchgangsöffnungen 34, 36 in der Schutzscheibe 14 vorgesehen, welche die Schutzscheibe 14 jeweils ganz durchdringen.

Diese Durchgangsöffnungen 34, 36 sind vorzugsweise im Randbereich der Schutzscheibe 14 innerhalb der Begrenzung des Klebestreifens 16b positioniert. Von diesen ist wenigstens eine Durchgangsöffnung 34 im unteren Bereich der Schutzscheibe 14 vorgesehen und dient dem Einfüllen des Materials für die Klebeschicht 16a. Wenigstens eine weitere Durchgangsöffnung 36 ist im oberen Bereich der Schutzscheibe 14 vorgesehen und dient dem Entlüften des Zwischenraums 20 während des Einfüllens des Materials für die Klebeschicht 16a. Alternativ oder zusätzlich zur weiteren Durchgangsöffnung 36 kann auch bei dieser Ausführungsform wenigstens eine Aussparung 32 in dem umlaufenden Klebestreifen 16b vorgesehen sein, vorzugsweise im oberen Bereich der Schutzscheibe 14.

Nach dem vollständigen Füllen des Zwischenraums 26 zwischen der Schutzscheibe 14 und der Scheibe 12 mit dem Material für die Klebeschicht 16a werden auch die Durchgangsöffnungen 34, 36 in der Schutzscheibe 14 mit diesem Material der Klebeschicht 16a gefüllt und auf diese Weise transparent verschlossen.

Die beiden Herstellungsverfahren von Fig. 2 und Fig. 3 können wahlweise auch miteinander kombiniert werden.

Bei beiden Herstellungsverfahren von Fig. 2 und Fig. 3 erfolgen das Einfüllen und das Aushärten des Klebematerial 16a, während die Schutzscheibe 14 gegen die Scheibe 12 gedrückt wird. Um eine im Wesentlichen einheitliche Klebeschicht 16a mit einer möglichst gleichmäßigen Schichtdicke zwischen der Scheibe 12 und der Schutzscheibe 14 zu erzielen, was für die Erzielung bzw. Beibehaltung der gewünschten optischen Eigenschaften der Verbundscheibe 10 insgesamt von Vorteil ist, wird die Schutzscheibe 14 während des Einbringens und des Aushärtens (zumindest während der Anfangsphase des Aushärtens) des Materials für die Klebeschicht 16a möglichst vollflächig und mit gleichverteiltem Druck gegen die Scheibe 14 gedrückt.

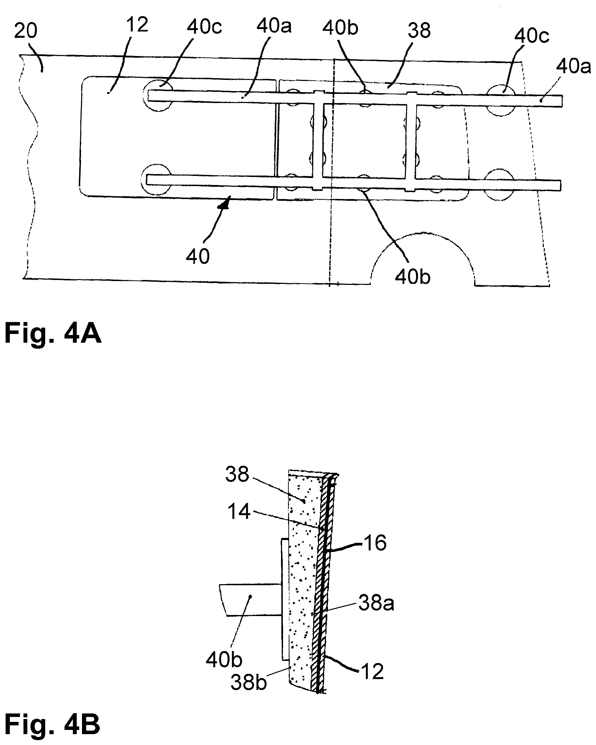

Fig. 4A und 4B veranschaulichen beispielhaft ein System zum Drücken der Schutzscheibe 14 gegen die Scheibe 12 für das erfindungsgemäße Herstellungsverfahren gemäß einem ersten Ausführungsbeispiel.

In Fig. 4A ist ein Ausschnitt einer Fahrzeug-Karosserie 20 mit zwei Seitenfenstern als Sichtöffnungen 22 gezeigt. Während von dem linken Seitenfenster in Fig. 4A die Scheibe 12 oder die Verbundscheibe 10 zu sehen ist, erfolgt bei dem rechten Seitenfenster in Fig. 4B die Herstellung der Verbundscheibe 10, welche selbst verdeckt ist. Zum Andrücken der Schutzscheibe 14 gegen die Scheibe 12 wird eine Druckplatte 38 eingesetzt, deren der Verbundscheibe 10 zugewandte Innenseite 38a entsprechend der Verbundscheibe 10 geformt ist und deren der Verbundscheibe 10 abgewandte Außenseite 38b beispielsweise im Wesentlichen plan ausgestaltet ist (vgl. Fig. 4B). Die Druckplatte 38 ist im Wesentlichen formstabil und besteht zum Beispiel aus Metall (z.B. Aluminium, etc.), Holz, Kunststoff oder Glas.

Die Druckplatte 38 erstreckt sich vorzugsweise im Wesentlichen über die gesamte Schutzscheibe 14 der zu bildenden Verbundscheibe 10, um einen möglichst homogenen, gleich verteilten und konstanten Druck auf die Schutzscheibe 14 ausüben zu können. Die Druckplatte 38 wird mit Hilfe einer geeigneten Halteeinrichtung 40 von außen gegen die Schutzscheibe 14 gedrückt.

Ein Beispiel für eine solche Halteeinrichtung 40 ist in Fig. 4A und 4B veranschaulicht. Die Halteeinrichtung 40 dieses Ausführungsbeispiels weist ein aus mehreren rohr- oder stangenförmigen Streben gebildetes Haltegestell 40a auf, an dem mehrere Haltplatten 40b vorgesehen sind, welche im Wesentlichen stempelförmig ausgestaltet sind (vgl. Fig. 4B) und sich gegen die Druckplatte 38 abstützen. An dem Haltegestell 40a sind ferner mehrere Klemmvorrichtungen in Form von Saugnäpfen 40c angebracht, mit denen das Haltegestell 40a gegen die Karosserie 20 gezogen wird. Anstelle der Saugnäpfe 40c können auch anders gestaltete Klemmvorrichtungen (z.B. Schraubklemmen, Anker, etc.) eingesetzt werden.

Das mittels der Saugnäpfe 40c zur Karosserie 20 hin gezogene Haltegestell 40a drückt über die Halteplatten 40b auf die Druckplatte 38 (Vorspannung der Druckplatte 38 in Richtung zur Scheibe 12), welche diesen Druck auf die Schutzscheibe 14 überträgt. Nach dem vollständigen Aushärten des Klebematerials für die Klebeschicht 16a wird die Halteeinrichtung 40 wieder entfernt.

Für das anhand von Fig. 3A und 3B beschriebene Herstellungsverfahren kann die Druckplatte 38 zudem mit geeigneten Öffnungen ausgebildet sein, durch welche hindurch die Durchgangsöffnung 34, 36 in der Schutzscheibe 14 zugänglich sind, so dass auch während des Einbringens des Materials für die Klebeschicht 16a bereits der Druck auf die Schutzscheibe 14 aufgebracht werden kann.

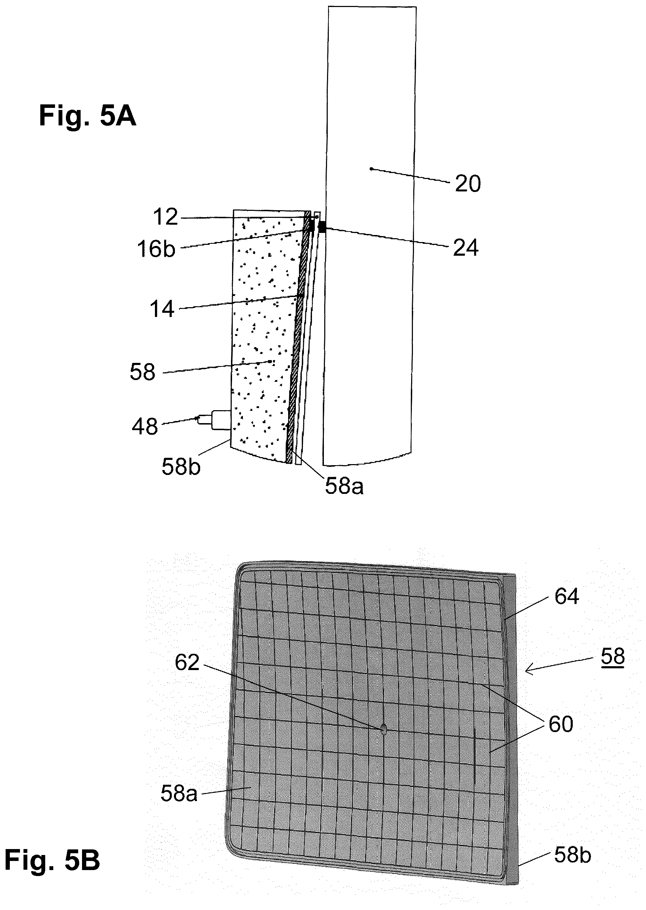

Fig. 5A und B veranschaulichen beispielhaft ein System zum Drücken der Schutzscheibe 14 gegen die Scheibe 12 für das erfindungsgemäße Herstellungsverfahren gemäß einem zweiten Ausführungsbeispiel.

Wie in Fig. 5A und B dargestellt, wird auch bei diesem Ausführungsbeispiel zum Andrücken der Schutzscheibe 14 gegen die Scheibe 12 eine Druckplatte 58 verwendet, deren der Verbundscheibe 10 zugewandte Innenseite 58a entsprechend der Verbundscheibe 10 geformt ist, um möglichst vollflächig an der Schutzscheibe 14 anzuliegen. Die Druckplatte 58 ist im Wesentlichen formstabil und besteht zum Beispiel aus Metall (z.B. Aluminium, etc.), Holz, Kunststoff oder Glas. Die Druckplatte 58 erstreckt sich vorzugsweise im Wesentlichen über die gesamte Schutzscheibe 14 der zu bildenden Verbundscheibe 10, um einen möglichst homogenen, gleich verteilten und konstanten Druck auf die Schutzscheibe 14 ausüben zu können.

Die Druckplatte 58 ist in diesem Ausführungsbeispiel als so genannte Vakuumplatte ausgebildet. Wie in Fig. 5B angedeutet, weist die Druckplatte 58 an ihrer der Schutzscheibe 14 zugewandten Innenseite 58a zahlreiche Ausnehmungen 60 in Form von Rillen oder Nuten auf, die rasterartig über die gesamte Innenseite 58a hinweg verteilt sind. Die Ausnehmungen 60 stehen dabei alle miteinander in Verbindung.

Die Druckplatte 58 wird beispielsweise mittels einer CNC-Maschine in der erforderlichen Maßgenauigkeit gefertigt, und die Ausnehmungen 60 werden zum Beispiel in die Innenseite 58a der Druckplatte 58 eingefräst.

Wie in Fig. 5B angedeutet, ist an der Innenseite 58a der Druckplatte 58 ferner eine umlaufende Abdichtung 64 zum Beispiel aus einem Gummimaterial angeordnet. Liegt die Druckplatte 58 mit ihrer Innenseite 58a auf der Schutzscheibe 14 auf, so wird durch die Ausnehmungen 60 an der Innenseite 58a der Druckplatte 58 ein fluiddichter Raum zwischen der Druckplatte 58 und der Schutzscheibe 14 gebildet.

Außerdem ist an der der Schutzscheibe 14 abgewandten Außenseite 58b der Druckplatte 58 ein Absaugstutzen 48 vorgesehen, der über eine Durchgangsöffnung 62 in der Druckplatte 58 mit den Ausnehmungen 60 in Fluidverbindung steht. An diesen Absaugstutzen 48 kann eine Vakuumpumpe (nicht dargestellt) angeschlossen werden, um den Raum zwischen der Druckplatte 58 und der Schutzscheibe 14 zu evakuieren. Mit Hilfe der Vakuumpumpe kann in dem Raum ein Unterdruck im Bereich von zum Beispiel 10³ - 10 mbar eingestellt werden.

Durch diesen Unterdruck wird die Druckplatte 58 fest an der Schutzscheibe 14 gehalten, nachdem die Schutzscheibe 14 mittels des Klebestreifens 16b an der Scheibe 12 fixiert worden ist. Aufgrund ihrer Formstabilität kann die Druckplatte 58 so eine Verformung der Schutzscheibe 14 verhindern, wenn das Klebematerial in den Zwischenraum 26 zwischen der Scheibe 12 und der Schutzscheibe 14 gefüllt wird. Andererseits hält der Klebestreifen 16b die Schutzscheibe 14 - und mit dieser auch die Druckplatte 58 - fest an der Scheibe 12 und gewährleistet aufgrund seiner Formstabilität zudem die Beibehaltung des gewünschten Abstandes zwischen der Scheibe 12 und der Schutzscheibe 14. Nach dem Aushärten der Klebeschicht 16a können der Unterdruck wieder abgebaut und die Druckplatte 58 entfernt werden.

Das Einfüllen des Materials für die Klebeschicht 16a erfolgt beispielsweise nach einem der Verfahren, die oben Bezug nehmend auf Fig. 2 und 3 erläutert worden sind. Für das anhand von Fig. 3A und 3B beschriebene Herstellungsverfahren kann die Druckplatte 58, im Bereich zwischen ihren Ausnehmungen 60, zudem mit geeigneten Öffnungen ausgebildet sein, durch welche hindurch die Durchgangsöffnungen 34, 36 in der Schutzscheibe 14 zugänglich sind, so dass auch während des Einbringens des Materials für die Klebeschicht 16a bereits der Druck auf die Schutzscheibe 14 aufgebracht werden kann.

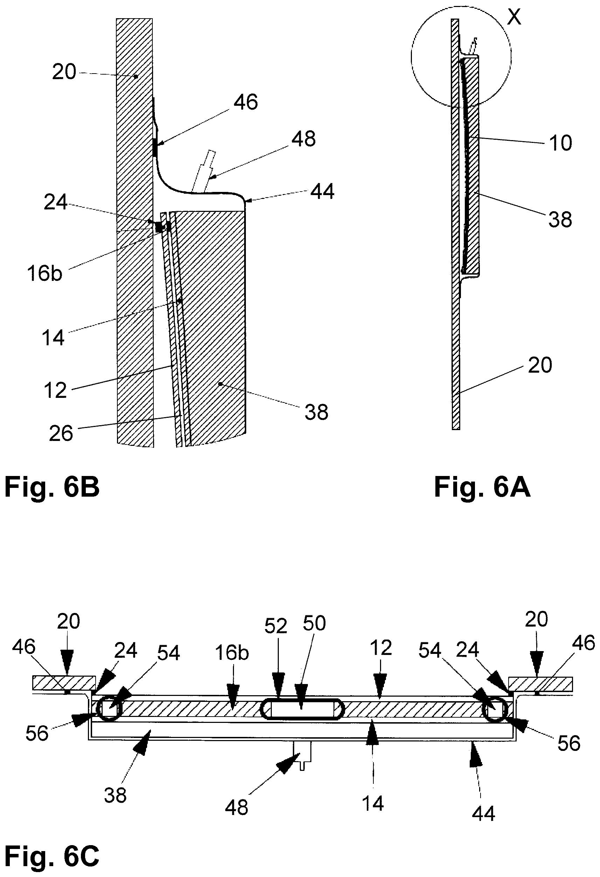

Fig. 6A bis C veranschaulichen beispielhaft ein System zum Drücken der Schutzscheibe 14 gegen die Scheibe 12 für das erfindungsgemäße Herstellungsverfahren gemäß einem dritten Ausführungsbeispiel.

Grundsätzlich wird bei diesem System eine einheitliche Druckverteilung für die Schutzscheibe 14 gegen die Scheibe 12 mittels eines Unterdrucks erzeugt. Ein geeigneter Druck liegt zum Beispiel im Bereich von etwa 10³ mbar bis etwa 10 mbar.

Wie in Fig. 6A bis C dargestellt, wird auch bei diesem Ausführungsbeispiel zum Andrücken der Schutzscheibe 14 gegen die Scheibe 12 eine Druckplatte 38 verwendet, deren der Verbundscheibe 10 zugewandte Innenseite 38a entsprechend der Verbundscheibe 10 geformt ist, um möglichst vollflächig an der Schutzscheibe 14 anzuliegen. Die Druckplatte 38 ist im Wesentlichen formstabil und besteht zum Beispiel aus Metall (z.B. Aluminium, etc.), Holz, Kunststoff oder Glas. Die Druckplatte 38 erstreckt sich vorzugsweise im Wesentlichen über die gesamte Schutzscheibe 14 der zu bildenden Verbundscheibe 10, um einen möglichst homogenen, gleich verteilten und konstanten Druck auf die Schutzscheibe 14 ausüben zu können.

Die Komponenten der Verbundscheibe 10, d.h. insbesondere die Scheibe 10 und die Schutzscheibe 14, und die Druckplatte 38 werden von einer fluiddichten Hülle 44 in Form einer Kunststofffolie (z.B. Nylon) überdeckt. Diese Hülle 44 wird mittels einer fluiddichten Klebeverbindung 46 (z.B. doppelseitiges Klebeband) an der Karosserie 20 befestigt; falls die Schutzscheibe 14 kleiner als die Scheibe 12 ist, kann die Hülle 44 auch an der Scheibe 12 befestigt werden. Auf diese Weise wird durch die Karosserie 20, die Kleberaupe 24, die Scheibe 12 und die Hülle 44 ein luftdichter Innenraum geschaffen.

Um diesen Innenraum der Hülle 44 zu evakuieren, ist an bzw. in dieser ein Absaugstutzen 48 vorgesehen, an den eine Vakuumpumpe (nicht dargestellt) angeschlossen werden kann. Mit Hilfe der Vakuumpumpe kann im Innenraum der Hülle 44 ein Unterdruck im Bereich von zum Beispiel 10³ - 10 mbar eingestellt werden. Aufgrund dieses Unterdrucks legt sich die Hülle 44 eng an die Druckplatte 38, die Komponenten der Verbundscheibe 10 und die Karosserie an und drückt auf diese Weise die Druckplatte 38 gleichmäßig gegen die Schutzscheibe 14. Als Resultat wird die Schutzscheibe 14 mit einer einheitlichen bzw. gleichmäßigen Druckverteilung gegen die Scheibe 12 gedrückt.

Beim Herstellen der Verbundscheibe 10 oder Austauschen der Schutzscheibe 14 wird die Schutzscheibe 14 zunächst mittels des im Randbereich der Schutzscheibe 14 umlaufenden Klebestreifens 16b an der Scheibe 12 fixiert. Hierzu wird die Schutzscheibe 14 zum Beispiel mit Hilfe eines Abrollers oder dergleichen fest gegen den Klebestreifen 16b gedrückt, wodurch der Klebestreifen 16b auch fest gegen die Scheibe 12 gedrückt wird.

Dann wird die Druckplatte 38 auf die Schutzscheibe 14 gesetzt und mit der Hülle 44 überdeckt. Über das beschriebene Unterdrucksystem wird die Schutzscheibe 14 dann gegen die Scheibe 12 gedrückt, um während des Einfüllens und Aushärtens des Klebematerials 16a einen einheitlichen, konstanten Abstand zwischen Schutzscheibe 14 und Scheibe 12 sicherzustellen.

Um das Klebematerial 16a trotz des Unterdrucksystems in den Zwischenraum 26 zwischen der Scheibe 12 und der Schutzscheibe 14 einfüllen zu können, weist die Hülle 44 wenigstens eine Einfüllöffnung 50 auf, welche mit einer Aussparung 30 im Klebestreifen 16b oder einer Durchgangsöffnung 34 in der Schutzscheibe 14 und darüber mit dem Zwischenraum 26 in Fluidverbindung steht und gegenüber der restlichen Hülle 44 mittels einer Abdichtung 52 fluiddicht abgedichtet ist. Außerdem weist die Hülle 44 wenigstens eine Entlüftungsöffnung 54 auf, welche mit einer Aussparung 32 im Klebestreifen 16b oder einer Durchgangsöffnung 36 in der Schutzscheibe 14 und darüber mit dem Zwischenraum 26 in Fluidverbindung steht und gegenüber der restlichen Hülle 44 mittels einer Abdichtung 56 fluiddicht abgedichtet ist.

Nach dem (vorzugsweise vollständigen) Aushärten des Klebematerials 16a können der Unterdruck abgebaut, die Hülle 44 und die Druckplatte 38 entfernt werden. Abschließend kann bei Bedarf der umlaufende Rand der Verbundscheibe 10 mit einer Dichtung 18 fluiddicht abgedichtet werden (vgl. Fig. 1).

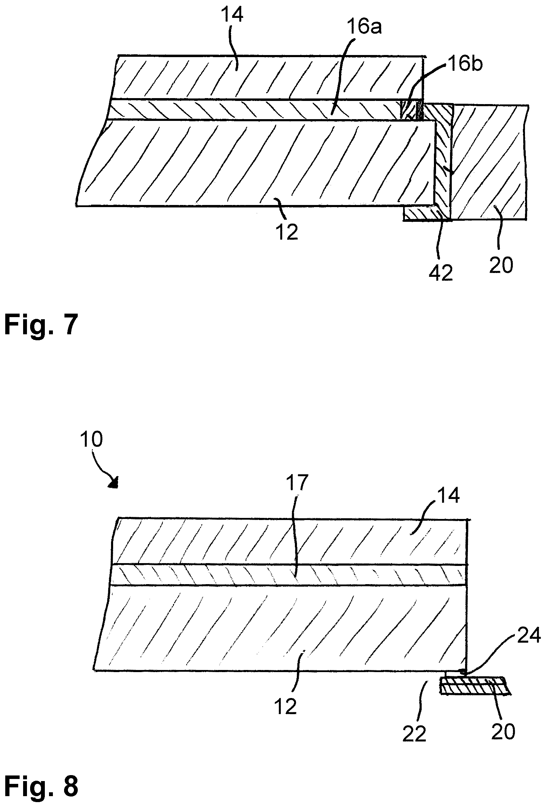

In Fig. 7 ist ein weiteres Ausführungsbeispiel einer erfindungsgemäßen Verbundscheibe 10 gezeigt.

In diesem Ausführungsbeispiel handelt es sich bei der transparenten Scheibe 12 um eine schusssichere Sicherheitsscheibe, welche mit Hilfe eines Halterahmens 42 in einer Sichtöffnung 22 einer gepanzerten Karosserie 20 montiert ist.

Die Schutzscheibe 14 ist analog zu einem der oben beschriebenen Ausführungsbeispiele über eine Verklebung 16 vollflächig mit der Scheibe 12 verbunden. Die Schutzscheibe 14 erstreckt sich dabei nicht über die gesamte Scheibe 12, sondern nur über deren freien Sichtbereich, welcher vom Halterahmen 42 nicht abgedeckt wird. Mit anderen Worten ist die Schutzscheibe 14 bei dieser Ausführungsform etwas kleiner dimensioniert als die zu schützende Scheibe 12.

Im Übrigen entsprechen das Ausführungsbeispiel von Fig. 7 und seine Herstellungsmöglichkeiten den Erläuterungen zu den obigen Ausführungsbeispielen.

Fig. 1 und 7 zeigen jeweils einen Fall einer Verbundscheibe 10, welche an einer Sichtöffnung 22 einer Karosserie 20 montiert ist. Die transparente Scheibe 12 kann dabei jeweils bereits an der Karosserie 20 bzw. dem Halterahmen 42 befestigt sein. Alternativ kann die Verbundscheibe auch vormontiert und anschließend zum Beispiel in einer Fensteröffnung eines Kraftfahrzeuges eingebaut werden. Die erfindungsgemäße Verbundscheibe 10 ermöglicht dabei in jedem Fall ein Austauschen der Schutzscheibe 14, ohne die Scheibe 12 zu beschädigen oder zu zerstören.

In Fig. 8 ist eine alternative Ausführungsform einer Verbundscheibe 10 dargestellt.

Die Schutzscheibe 14 wird über eine Verklebung in Form einer transparenten, doppelseitigen Klebefolie 17 vollflächig mit der Scheibe 12 verbunden. Ein zusätzlicher Klebestreifen 16b kann in diesem Fall entfallen. Eine Dichtung 18 kann auch hier optional vorgesehen sein. Bei der Herstellung dieser Verbundscheibe 10 wird die Schutzscheibe 14 vorzugsweise ebenfalls gegen die Scheibe 12 gedrückt, zum Beispiel mittels einer Druckplatte 38 oder mittels einer über sie hinweg bewegten Druckwalze oder dergleichen.

### BEZUGSZIFFERNLISTE

- 10: Verbundscheibe
- 12: Scheibe
- 14: Schutzscheibe
- 16: Verklebung
- 16a: Klebeschicht
- 16b: doppelseitige Klebestreifen
- 17: doppelseitige Klebefolie
- 18: Dichtung
- 20: Wandung, Karosserie
- 22: Sichtöffnung in 20
- 24: Kleberaupe
- 26: Zwischenraum
- 28: Trichter
- 30: Aussparung in 16b
- 32: Aussparung in 16b
- 34: Durchgangsöffnung in 14
- 36: Durchgangsöffnung in 14
- 38: Druckplatte
- 38a: Innenseite
- 38b: Außenseite
- 40: Halteeinrichtung
- 40a: Haltegestell
- 40b: Halteplatte
- 40c: Saugnapf
- 42: Halterahmen
- 44: fluiddichte Hülle
- 46: fluiddichte Klebeverbindung
- 48: Absaugstutzen
- 50: Einfüllöffnung
- 52: Abdichtung
- 54: Entlüftungsöffnung
- 56: Abdichtung
- 58: Druckplatte
- 58a: Innenseite
- 58b: Außenseite
- 60: Ausnehmungen
- 62: Durchgangsöffnung
- 64: Abdichtung

## Patentansprüche

1. Verfahren zum Herstellen einer transparenten Verbundscheibe (10), insbesondere für Fahrzeuge, welche eine transparente Scheibe (12) zum Verschließen einer Sichtöffnung (22) in einer Wandung (20) und eine austauschbare transparente Schutzscheibe (14), welche an einer Außenseite der Scheibe (12) die Scheibe (12) zumindest teilweise überdeckend angeordnet ist, aufweist, mit den Schritten:
Bereitstellen einer transparenten Schutzscheibe (14);
Fixieren der Schutzscheibe (14) an der Scheibe (12) mittels eines Klebestreifens (16b) im umlaufenden Randbereich der Schutzscheibe (14);
Drücken der Schutzscheibe (14) gegen die Scheibe (12) mit einer im Wesentlichen einheitlichen Druckverteilung über die Schutzscheibe (14) hinweg, wobei der Klebestreifen (16b) derart formstabil ist, dass er einen im Wesentlichen einheitlichen Zwischenraum (26) zwischen der Scheibe (12) und der Schutzscheibe (14) bildet;
Füllen des Zwischenraums (26) zwischen der Scheibe (12) und der Schutzscheibe (14) mit einem transparenten Klebematerial (16a), während die Schutzscheibe (14) weiter gegen die Scheibe (12) gedrückt wird; und
Aushärten des Klebematerials (16a), während die Schutzscheibe (14) zumindest teilweise weiter gegen die Scheibe (12) gedrückt wird,
wobei als transparentes Klebematerial (16a) ein bei Raumtemperatur gießbarer, bei Raumtemperatur additionsvernetzender Zweikomponenten-Silikonkautschuk verwendet wird, dessen Zustand nach der Vulkanisation gelartig ist oder ein Zweikomponenten-Gießharz verwendet wird.

2. Verfahren nach Anspruch 1,
bei welchem die Schutzscheibe (14) mittels einer Druckplatte (38, 58) gegen die Scheibe (12) gedrückt wird, die eine der Schutzscheibe (14) zugewandte Innenseite (38a, 58a) aufweist, welche eine der Scheibe (12) abgewandte Außenseite der Schutzscheibe (14) im Wesentlichen vollflächig kontaktiert.

3. Verfahren nach Anspruch 2,
bei welchem die Druckplatte (58) mittels Unterdruck gegen die Schutzscheibe (14) gedrückt wird.

4. Verfahren nach Anspruch 3,
bei welchem die Innenseite (58a) der Druckplatte (58) mehrere Ausnehmungen (60) aufweist und ein durch diese Ausnehmungen (60) gebildeter Raum zwischen der Druckplatte (58) und der Schutzscheibe (14) evakuiert wird.

5. Verfahren nach Anspruch 2,
bei welchem die Druckplatte (38) mittels einer Halteeinrichtung (40) unter Vorspannung gegen die Scheibe (12) an der Wandung (20) und/oder der Scheibe (12) befestigt wird.

6. Verfahren nach einem der Ansprüche 1 bis 3,
bei welchem die an der Scheibe (12) fixierte Schutzscheibe (14) mit einer fluiddichten Hülle (44) überdeckt wird und ein Innenraum der Hülle (44) evakuiert wird, um die Schutzscheibe (14) gegen die Scheibe (12) zu drücken.

7. Verfahren nach einem der vorhergehenden Ansprüche,
bei welchem das Klebematerial (16a) stirnseitig in den Zwischenraum (26) zwischen der Scheibe (12) und der Schutzscheibe (14) eingebracht wird.

8. Verfahren nach einem der vorhergehenden Ansprüche,
bei welchem das Klebematerial (16a) durch wenigstens eine Durchgangsöffnung (34) in der Schutzscheibe (14) in den Zwischenraum (26) zwischen der Scheibe (12) und der Schutzscheibe (14) eingebracht wird.

9. Bausatz zum Herstellen einer transparenten Verbundscheibe, insbesondere zum Durchführen eines Verfahrens nach einem der Ansprüche 1 bis 8, aufweisend:
eine transparente Schutzscheibe (14);
ein Klebematerial für einen formstabilen Klebestreifen (16b) zum Fixieren der Schutzscheibe (14) an einer Außenseite einer transparenten Scheibe (12) im umlaufenden Randbereich der Schutzscheibe (14) und Bilden eines im Wesentlichen einheitlichen Zwischenraumes (26) zwischen der Scheibe (12) und der Schutzscheibe (14);
ein transparentes Klebematerial (16a) zum vollflächigen Verkleben der Schutzscheibe (14) mit der Scheibe (12); und
eine Einrichtung (38, 44, 58) zum Drücken der Schutzscheibe (14) gegen die Scheibe (12) während des Füllens des transparenten Klebematerials (16a) in den Zwischenraum (26) zwischen der Scheibe (12) und der Schutzscheibe (14) und des Aushärtens des transparenten Klebematerials (16a) mit einer im Wesentlichen einheitlichen Druckverteilung über die Schutzscheibe hinweg,
wobei das transparente Klebematerial (16a) ein bei Raumtemperatur gießbarer, bei Raumtemperatur additionsvernetzender Zweikomponenten-Silikonkautschuk ist, dessen Zustand nach der Vulkanisation gelartig ist oder ein Zweikomponenten-Gießharz ist.

10. Bausatz nach Anspruch 9,
bei welchem die Einrichtung zum Drücken der Schutzscheibe (14) gegen die Scheibe (12) eine Druckplatte (38, 58) aufweist, die eine der Schutzscheibe (14) zugewandte Innenseite (38a, 58a) aufweist, welche eine der Scheibe (12) abgewandte Außenseite der Schutzscheibe (14) im Wesentlichen vollflächig kontaktiert.

11. Bausatz nach Anspruch 10,
bei welchem die Innenseite (58a) der Druckplatte (58) mehrere Ausnehmungen (60) und einen mit diesen Ausnehmungen (60) in Fluidverbindung stehenden Absaugstutzen (48) zum Evakuieren eines durch die Ausnehmungen (60) zwischen der Druckplatte (58) und der Schutzscheibe (14) gebildeten Raums aufweist.

12. Bausatz nach Anspruch 10,
bei welchem die Einrichtung zum Drücken der Schutzscheibe (14) gegen die Scheibe (12) ferner eine Halteeinrichtung (40) aufweist, mit welcher die Druckplatte (38) an der Wandung (20) und/oder der Scheibe (12) befestigt werden kann und dabei unter Vorspannung gegen die Scheibe (12) steht.

13. Bausatz nach einem der Ansprüche 9 bis 12,
bei welchem die Einrichtung zum Drücken der Schutzscheibe (14) gegen die Scheibe (12) eine fluiddichte Hülle (44) zum Überdecken der an der Scheibe (12) fixierten Schutzscheibe (14) aufweist, welche fluiddicht an der Wandung (20) und/oder der Scheibe (12) befestigbar ist und einen Absaugstutzen (48) zum Evakuieren eines Innenraums der Hülle (44) aufweist.

## Claims

1. A method for producing repairing a transparent composite pane (10), in particular for vehicles, comprising a transparent pane (12) for closing a viewing opening (22) in a wall (20) and an exchangeable transparent protective pane (14) arranged on an outer side of said pane (12) while at least partially overlapping said pane (12), comprising the steps of:
providing a transparent protective pane (14);
fixing said protective pane (14) to said pane (12) by means of an adhesive strip (16b) in the peripheral edge region of said protective pane (14);
pressing said protective pane (14) against said pane (12) with a substantially uniform pressure distribution across said protective pane (14), said adhesive strip (16b) being dimensionally stable such that it forms a substantially uniform intermediate space (26) between said pane (16) and said protective pane (14);
filling said intermediate space (26) between said pane (12) and said protective pane (14) with a transparent adhesive material (16a) while still pressing said protective pane (14) against said pane (12); and
curing said adhesive material (16a) while still pressing said protective pane (14) at least partially against said pane (12),
wherein a two-component silicone rubber being pourable at room temperature and addition cross-linking at room temperature whose condition is jellylike after vulcanization, or a two-component pouring resin is used as transparent adhesive material (16a).

2. The method according to claim 1, wherein
said protective pane (14) is pressed against said pane (12) by means of a pressure plate (38, 58) which has an inner surface (38a, 58a) facing towards said protective pane (14) and contacting an outer surface of said protective pane (14) facing away from said pane (12) substantially over the entire surface.

3. The method according to claim 2, wherein
said pressure plate (58) is pressed against said protective pane (14) by means of negative pressure.

4. The method according to claim 3, wherein
said inner surface (58a) of said pressure plate (58) has a plurality of recesses (60), and a space formed by these recesses (60) between said pressure plate (58) and said protective pane (14) is evacuated.

5. The method according to claim 2, wherein
said pressure plate (38) is attached to said wall (20) and/or said pane (12) by means of a retaining means (40) while biasing it against said pane (12).

6. Method according to any one of claims 1 to 3, wherein
said protective pane (14) fixed to said pane (12) is covered with a wrapper (44), and an interior of said wrapper (44) is evacuated in order to press said protective pane (14) against said pane (12).

7. The method according to any one of preceding claims, wherein
said adhesive material (16a) is introduced into said intermediate space (26) between said pane (12) and said protective pane (14) from a front side.

8. The method according to any one of preceding claims, wherein
said adhesive material (16a) is introduced into said intermediate space (26) between said pane (12) and said protective pane (14) through at least one through opening (34) in said protective pane (14).

9. A kit for producing and a transparent composite pane, in particular for carrying out a method according to any one of claims 1 to 8, comprising:
a transparent protective pane (14);
an adhesive material for a dimensionally stable adhesive strip (16b) for fixing said protective pane (14) to an outer surface of a transparent pane (12) in the peripheral edge region of said protective pane (14) and forming a substantially uniform intermediate space (26) between said pane (12) and said protective pane (14);
a transparent adhesive material (16a) for bonding said protective pane (14) to said pane (12) over the entire surface; and
means (38, 44, 58) for pressing said protective pane (14) against said pane (12) with a substantially uniform pressure distribution across said protective pane during filling said transparent adhesive material (16a) into said intermediate space (26) between said pane (12) and said protective pane (14) and curing said transparent adhesive material (16a),
wherein said transparent adhesive material (16a) is a two-component silicone rubber being pourable at room temperature and addition cross-linking at room temperature whose condition is jellylike after vulcanization, or a two-component pouring resin.

10. The kit according to claim 9, wherein
said means for pressing said protective pane (14) against said pane (12) comprises a pressure plate (38, 58) having an inner surface (38a, 58a) facing towards said protective pane (14) and contacting an outer surface of said protective pane (14) facing away from said pane (12) substantially over the entire surface.

11. The kit of claim 10, wherein
said inner surface (58a) of said pressure plate (58) has a plurality of recesses (60) and a suction socket (48) in fluid communication with these recesses (60) for evacuating a space formed by said recesses (60) between said pressure plate (58) and said protective pane (14).

12. The kit according to claim 10, wherein
said means for pressing said protective pane (14) against said pane (12) further comprises a retaining means (40), with which said pressure plate (38) can be attached on said wall (20) and/or said pane (12) while being biased against said pane (12).

13. The kit according to any one of claims 9 to 12, wherein
said means for pressing said protective pane (14) against said pane (12) comprises a fluid-tight wrapper (44) for covering said protective pane (14) fixed to said pane (12) which can be attached fluid-tightly on said wall (20) and/or said pane (12) and comprises a suction socket (48) for evacuating an interior of said wrapper (44).

## Revendications

1. Procédé pour fabriquer une vitre feuilletée transparente (10), en particulier pour des véhicules automobiles, laquelle présente une vitre transparente (12) pour l'obturation d'une baie (22) dans une paroi (20) et une vitre de protection transparente remplaçable (14), laquelle est agencée au niveau d'une face extérieure de la vitre (12) en recouvrant au moins en partie la vitre (12), avec les étapes de :
mise à disposition d'une vitre de protection transparente (14) ;
fixation de la vitre de protection (14) à la vitre (12) au moyen d'un ruban adhésif (16b) dans la zone de bord périphérique de la vitre de protection (14) ;
pression de la vitre de protection (14) contre la vitre (12) avec une répartition de pression sensiblement uniforme sur la vitre de protection (14), dans lequel le ruban adhésif (16b) est tellement indéformable qu'il forme un espace intermédiaire (26) sensiblement uniforme entre la vitre (12) et la vitre de protection (14) ;
remplissage de l'espace intermédiaire (26) entre la vitre (12) et la vitre de protection (14) avec une matière adhésive transparente (16a), pendant que la vitre de protection (14) continue d'être pressée contre la vitre (12) ; et
durcissement de la matière adhésive (16a), pendant que la vitre de protection (14) continue d'être pressée au moins en partie contre la vitre (12),
dans lequel un caoutchouc de silicone à deux composants réticulant par addition à température ambiante, coulable à température ambiante est utilisé en tant que matière adhésive transparente (16a), dont l'état est semblable au gel après la vulcanisation ou une résine de coulée à deux composants est utilisée.

2. Procédé selon la revendication 1,
dans lequel la vitre de protection (14) est pressée contre la vitre (12) au moyen d'une plaque de pression (38, 58), qui présente une face intérieure (38a, 58a) tournée vers la vitre de protection (14), laquelle touche sensiblement sur toute la surface une face extérieure de la vitre de protection (14) opposée à la vitre (12).

3. Procédé selon la revendication 2,
dans lequel la plaque de pression (58) est pressée contre la vitre de protection (14) par dépression.

4. Procédé selon la revendication 3,
dans lequel la face intérieure (58a) de la plaque de pression (58) présente plusieurs évidements (60) et un espace formé par ces évidements (60) entre la plaque de pression (58) et la vitre de protection (14) est évacué.

5. Procédé selon la revendication 2,
dans lequel la plaque de pression (38) est fixée à la paroi (20) et/ou à la vitre (12) au moyen d'un dispositif de retenue (40) sous précontrainte contre la vitre (12).

6. Procédé selon l'une quelconque des revendications 1 à 3,
dans lequel la vitre de protection (14) fixée à la vitre (12) est recouverte d'une enveloppe étanche aux fluides (44) et un espace intérieur de l'enveloppe (44) est évacué pour presser la vitre de protection (14) contre la vitre (12).

7. Procédé selon l'une quelconque des revendications précédentes,
dans lequel la matière adhésive (16a) est introduite côté frontal dans l'espace intermédiaire (26) entre la vitre (12) et la vitre de protection (14).

8. Procédé selon l'une quelconque des revendications précédentes,
dans lequel la matière adhésive (16a) est introduite dans l'espace intermédiaire (26) entre la vitre (12) et la vitre de protection (14) par au moins une ouverture de passage (34) dans la vitre de protection (14).

9. Kit pour fabriquer une vitre feuilletée transparente, en particulier pour réaliser un procédé selon l'une quelconque des revendications 1 à 8, présentant :
une vitre de protection transparente (14) ;
une matière adhésive pour un ruban adhésif indéformable (16b) pour la fixation de la vitre de protection (14) à une face extérieure d'une vitre transparente (12) dans la zone de bord périphérique de la vitre de protection (14) et la formation d'un espace intermédiaire (26) sensiblement uniforme entre la vitre (12) et la vitre de protection (14) ;
une matière adhésive transparente (16a) pour le collage sur toute la surface de la vitre de protection (14) avec la vitre (12) ; et
un dispositif (38, 44, 58) de pression de la vitre de protection (14) contre la vitre (12) pendant le remplissage de la matière adhésive transparente (16a) dans l'espace intermédiaire (26) entre la vitre (12) et la vitre de protection (14) et le durcissement de la matière adhésive transparente (16a) avec une répartition de pression sensiblement uniforme sur la vitre de protection,
dans lequel la matière adhésive transparente (16a) est un caoutchouc de silicone à deux composants réticulant par addition à température ambiante, coulable à température ambiante dont l'état est semblable au gel après la vulcanisation ou est une résine de coulée à deux composants.

10. Kit selon la revendication 9,
dans lequel le dispositif de pression de la vitre de protection (14) contre la vitre (12) présente une plaque de pression (38, 58), qui présente une face intérieure (38a, 58a) tournée vers la vitre de protection (14), laquelle touche sensiblement sur toute la surface une face extérieure de la vitre de protection (14) opposée à la vitre (12).

11. Kit selon la revendication 10,
dans lequel la face intérieure (58a) de la plaque de pression (58) présente plusieurs évidements (60) et une tubulure d'aspiration (48) en communication fluidique avec ces évidements (60) pour l'évacuation d'un espace formé par les évidements (60) entre la plaque de pression (58) et la vitre de protection (14).

12. Kit selon la revendication 10,
dans lequel le dispositif de pression de la vitre de protection (14) contre la vitre (12) présente en outre un dispositif de retenue (40), avec lequel la plaque de pression (38) peut être fixée à la paroi (20) et/ou à la vitre (12) et est ce faisant sous précontrainte contre la vitre (12).

13. Kit selon l'une quelconque des revendications 9 à 12,
dans lequel le dispositif de pression de la vitre de protection (14) contre la vitre (12) présente une enveloppe étanche aux fluides (44) pour recouvrir la vitre de protection (14) fixée à la vitre (12), laquelle peut être fixée de manière étanche aux fluides à la paroi (20) et/ou à la vitre (12) et présente une tubulure d'aspiration (48) pour l'évacuation d'un espace intérieur de l'enveloppe (44).
